# FASCICULE DE BREVET EUROPEEN

(11) **EP 2 132 426 B1**
(45) Date de publication et mention de la délivrance du brevet: **04.06.2014**
(21) Numéro de dépôt: 08788145.4
(22) Date de dépôt: 08.04.2008
(51) Int. Cl.: F02K 1/38, F02K 1/48, F02K 1/80

(54) **MELANGEUR EN CMC A CAPOTAGE EXTERNE STRUCTURAL**
CMC-MISCHER MIT STRUKTURELLER AUSSENVERSCHALUNG
CMC MIXER WITH STRUCTURAL OUTER COWLING

(30) Priorité: 10.04.2007 FR 0702589
(43) Date de publication de la demande: 16.12.2009
(73) Titulaire: HERAKLES, 33185 Le Haillan (FR)
(72) Inventeur: CONETE, Eric, 33700 Merignac (FR); CARRERE, Benoît, 33320 Le Taillan Medoc (FR); BAROUMES, Laurent, Bordeaux 33000 (FR)
(74) Mandataire: Desormiere, Pierre-Louis
(86) Numéro de dépôt international: PCT/FR2008/050623
(87) Numéro de publication internationale: WO 2008/139114

(56) Documents cités:
- EP-A- 0 898 071
- FR-A- 2 875 854
- GB-A- 2 014 665
- US-A- 4 481 698
- US-A- 5 249 877
- US-A1- 2004 255 573

## Description

### Arrière-plan de l'invention

La présente invention se rapporte au domaine général des tuyères équipant les turboréacteurs d'avions. Elle vise plus particulièrement les tuyères à flux séparés équipées de mélangeurs de flux qui permettent d'améliorer les performances du moteur tout en réduisant le bruit émis par le jet en sortie de la tuyère.

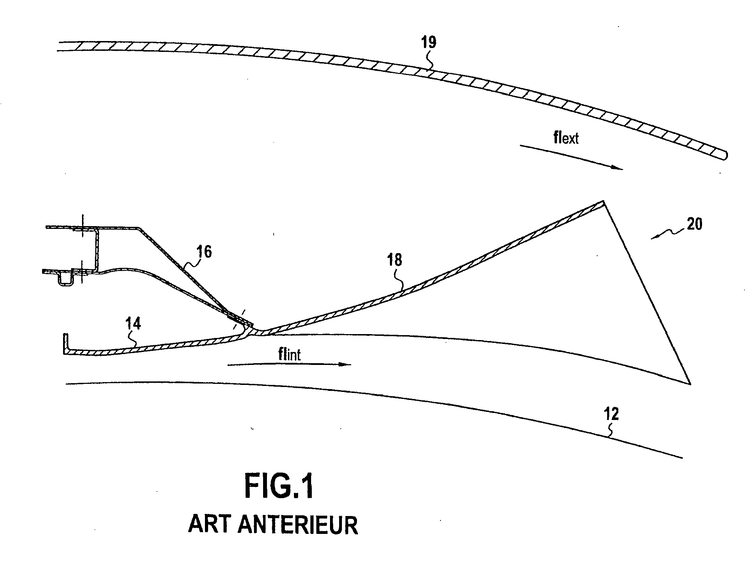

Plus précisément, comme illustré très schématiquement sur la figure 1, une tuyère à flux séparés de turboréacteurs comprend typiquement, de l'intérieur vers l'extérieur, un corps central 12 (aussi appelé "plug"), une virole interne 14, un capot secondaire ou capotage externe 16 et une nacelle 19 centrés sur l'axe X-X' de la tuyère.

La virole interne 14, de forme sensiblement cylindrique, s'étend selon l'axe X-X' de la tuyère, le corps central 12 étant disposé concentriquement à l'intérieur de la virole interne 14 et se terminant par une partie sensiblement conique. La virole interne 14 définit un premier canal annulaire pour l'écoulement d'un flux interne chaud (ou flux primaire) issu de la chambre de combustion. La virole interne correspond au carter d'échappement de la tuyère.

Le capot secondaire 16 est disposé concentriquement autour de la virole interne 14 et définit avec la nacelle 19 un second canal annulaire pour l'écoulement d'un flux externe froid (ou flux secondaire) provenant de la soufflante.

De façon connue et afin de réduire la consommation spécifique, la tuyère est munie d'un mélangeur 18 ayant une conception particulière pour favoriser le mélange entre le flux interne chaud flint et le flux externe froid flext issus du turboréacteur. Comme illustré sur la figure 1, le mélangeur 18 comporte une structure à lobes 20 qui représente une des conceptions les plus utilisées actuellement dans les turboréacteurs civils. En effet, le mélangeur à lobes permet d'obtenir un cisaillement radial entre le flux interne chaud et le flux externe froid afin de favoriser le mélange entre ces flux. Le mélangeur 18 est fixé à la virole interne 14.

Des exemples de réalisations de mélangeurs à lobes pour tuyères à flux séparés sont décrits notamment dans les documents EP 1 141 534, US 5 755 092 et US 5 924 632 et FR 2 875 854.

Cependant, si un tel type de mélangeur permet d'améliorer le rendement et les performances acoustiques des turboréacteurs à tuyères à flux séparés, il entraîne inévitablement une augmentation de la masse de la tuyère avec un impact sur la dynamique d'ensemble du moteur et sur la liaison de celui-ci avec le pylône avion.

Selon la technique la plus courante actuellement, le mélangeur à lobes est réalisé en une seule pièce avec un matériau métallique, typiquement de l'Inconel® 625, la structure à lobes étant reliée à une virole interne par un anneau en Y permettant également de fixer un capotage externe. Un tel mélangeur représente une masse supplémentaire non négligeable en porte-à-faux dans le moteur qui entraîne une augmentation du chargement mécanique sur la bride du carter d'échappement de la tuyère. En outre, l'anneau en Y est très sollicité par les gradients thermiques présents entre le premier canal annulaire d'écoulement du flux interne chaud et le second canal annulaire d'écoulement du flux externe froid.

Pour réduire les charges mécaniques engendrées par la présence d'une telle masse en sortie de tuyère, une solution consiste à réaliser la plus grande partie de surface du mélangeur, à savoir la structure à lobes, en matériau composite à matrice céramique (matériau CMC) qui est plus léger qu'un matériau métallique.

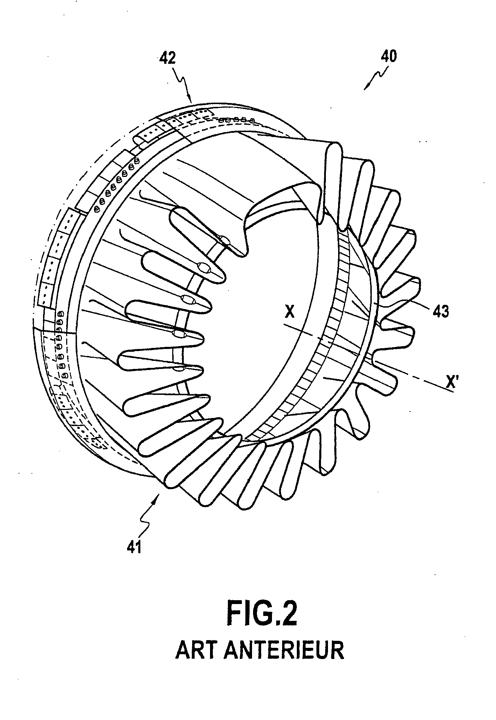

La figure 2 montre un mélangeur 40 qui comprend une structure à lobes 41 réalisée en CMC et une virole de fixation 42 en matériau métallique destinée à raccorder le mélangeur au carter d'échappement d'une tuyère. La structure à lobes 41 comprend en outre un anneau raidisseur 43 formant une liaison entre les lobes internes de la structure pour renforcer la tenue mécanique de l'ensemble de la structure à lobes. Ce mélangeur est décrit en détail dans le document WO 2006/035186.

Si cette architecture de mélangeur, dont le fonctionnement a été validé, permet un gain de masse important (environ 40%) par rapport à un mélangeur monobloc métallique, elle présente toutefois encore certains inconvénients.

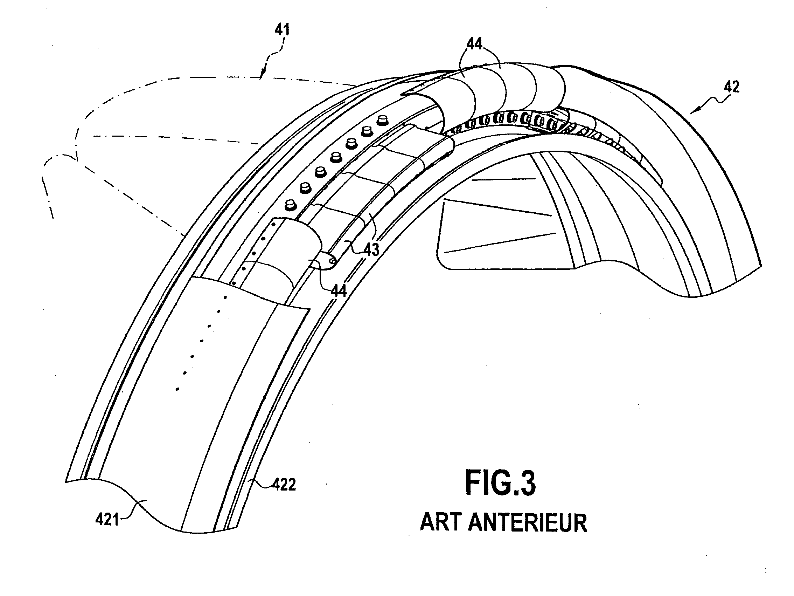

En effet, l'intégration de la structure à lobes 41 en matériau CMC nécessite l'utilisation d'un nombre important de pièces métalliques, ce qui empêche d'avoir un bilan de masse optimisé. En particulier, comme représentée sur la figure 3, la structure à lobes 41 est fixée à la virole interne 422 de la virole de fixation 42 par des pattes de fixation métalliques souples 43 permettant de compenser les dilatations différentielles entre la structure à lobes en matériau CMC et la virole interne en matériau métallique. De même, pour la reprise des dilatations différentielles entre la virole externe 421 et la virole interne 422 qui sont soumises respectivement à des flux de températures différentes (flux externe froid et flux interne chaud), on utilise des pattes de fixation métalliques souples 44 pour fixer la virole interne 422 à la virole externe 421.

En outre, ces liaisons souples, et notamment les pattes 43, doivent reprendre des gradients thermiques importants qui entraînent des contraintes mécaniques importantes au niveau de la structure à lobes, ce qui diminue sa durée de vie.

Enfin, la présence de l'anneau raidisseur génère des pertes de performances se traduisant par une augmentation de la consommation spécifique du turboréacteur, ce qui limite en partie les bénéfices obtenus par l'allègement de la masse du mélangeur.

### Objet et résumé de l'invention

La présente invention a pour but de proposer une nouvelle conception de mélangeur avec une structure à lobes en CMC dans laquelle le nombre de pièces métalliques peut être réduit afin d'accroître encore le gain de masse tout en diminuant les contraintes appliquées à la structure à lobes afin d'améliorer sa durée de vie.

A cet effet, la présente invention concerne un mélangeur comprenant une virole interne délimitant un canal d'écoulement pour le flux interne chaud, une virole externe disposée autour de la virole interne et délimitant avec cette dernière un canal d'écoulement pour le flux externe froid, et une structure à lobes dont les lobes s'étendent longitudinalement à partir des bords de fuite desdites viroles, mélangeur dans lequel, la structure à lobes est réalisée en matériau composite à matrice céramique et est attachée à la virole externe par des moyens de liaison souples.

Ainsi, en attachant la structure à lobes en CMC à la virole externe, il est possible de réaliser un mélangeur avec une quantité de pièces métalliques réduite par rapport aux mélangeurs de l'art antérieur dans lesquels la structure à lobes est attachée à la virole interne. En effet, avec l'architecture de mélangeur selon l'invention, la virole interne n'a plus le rôle de support de la structure à lobes. Elle assure seulement une fonction de canalisateur ("liner") pour le flux interne chaud. La masse de la virole interne peut donc être sensiblement diminuée notamment par l'omission de la bride intermédiaire auparavant nécessaire pour permettre la liaison avec la structure à lobes, ainsi que par réduction de l'épaisseur de sa paroi et de sa bride de fixation.

En outre, la virole externe étant une partie "froide" du mélangeur (c'est-à-dire une partie non soumise au flux interne chaud), elle se dilate peu et transmet, par conséquent, moins de sollicitations mécaniques à la structure à lobes par rapport à la virole interne. La durée de vie de la structure à lobes en CMC est ainsi améliorée. Par ailleurs, en raison de la moindre dilatation de la virole externe, les écarts de dilatation à compenser entre la structure à lobes et la virole externe pour empêcher un chargement mécanique induit sur la structure à lobes trop important sont limités. Par conséquent, le nombre de liaisons souples entre la structure à lobes et la virole externe peut être réduit en comparaison du nombre de liaisons souples nécessaire dans le cas de l'accrochage de la structure à lobes à la virole interne comme notamment décrit dans le document WO 2006/035186.

Selon un aspect de l'invention, la structure à lobes est attachée à la virole externe au moyen de pattes de fixation souples en matériau métallique. Puisque la structure à lobes est réalisée en un matériau CMC ayant un faible coefficient de dilatation thermique et que la virole externe est soumise au flux externe froid, les dilatations différentielles entre ces deux éléments sont limitées, ce qui permet d'utiliser des pattes de fixation relativement compactes et de réduire l'encombrement du mélangeur qui peut être intégré dans des cavités de faibles hauteurs.

La virole interne n'ayant plus de rôle structural dans le mélangeur de la présente invention, ses dilatations n'ont plus d'influence sur la structure à lobes. Elle peut être directement fixée à la virole externe, ce qui permet d'éviter l'utilisation de pattes de fixation métalliques souples et d'alléger encore la masse du mélangeur. Selon un aspect de l'invention, la virole interne et la virole externe comportent chacune une bride, les viroles étant fixées l'une à l'autre par assemblage de ces brides.

La majeure partie du mélangeur selon l'invention, à savoir la structure à lobes, est réalisée en un matériau composite à matrice céramique, ce qui permet de diminuer de façon significative la masse du mélangeur et, par conséquent, celle de la tuyère d'environ 40% par rapport à une tuyère équipée d'un mélangeur entièrement métallique.

En outre, la structure à lobes étant réalisée en matériau composite thermostructural, elle possède des bonnes propriétés mécaniques qu'elle conserve à température élevée.

On entend par "matériau composite à matrice céramique (CMC)", les matériaux formés d'un renfort en fibres réfractaires (carbone ou céramique) densifiés par une matrice au moins partiellement céramique. De tels matériaux CMC sont notamment les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium), les composites SiC/SiC (fibres de renfort et matrice en carbure de silicium), et les composites oxyde/oxyde.

La structure à lobes est de préférence réalisée en matériau composite SiC/SiC qui présente un module d'Young trois fois supérieur à un matériau composite C/SiC, ce qui permet de conférer à la structure à lobes un rigidité suffisante pour éviter l'utilisation d'un anneau raidisseur comme décrit dans le document WO 2006/035186.

La structure à lobes peut être formée d'une seule pièce ou à partir d'une pluralité de secteurs assemblés entre eux, ce qui permet, dans certains cas, de faciliter la fabrication de la structure à lobes et de réduire les coûts de rechange.

La présente invention concerne également un turboréacteur dont la tuyère à flux séparés comporte un mélangeur tel que défini précédemment.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue en demi-coupe très schématique d'une tuyère à flux séparés de turboréacteur selon l'art antérieur;
- la figure 2 est une vue en perspective d'un mélangeur pour tuyère de turboréacteur selon l'art antérieur;
- la figure 3 est une vue de face du mélangeur de la figure 2;
- la figure 4 est une vue en perspective d'un mélangeur pour tuyère à flux séparés de turboréacteur selon un mode de réalisation de l'invention;
- la figure 5A est une vue en perspective d'une pluralité de secteurs utilisés pour former une structure à lobes conformément à un autre mode de réalisation de l'invention;
- la figure 5B est une vue en perspective d'une structure à lobes obtenue après assemblage des secteurs de la figure 5A;
- la figure 5C est une vue en section agrandie suivant le repère VC de la figure 5B;
- la figure 6 est une vue en perspective suivant le plan de coupe VI de la figure 4;
- la figure 7 est une vue en perspective d'une patte de fixation de la figure 4;
- la figure 8 est une vue en section suivant le plan de coupe VIII de la figure 4;
- la figure 9 une vue en perspective de derrière suivant le plan de coupe VI de la figure 4.

### Description détaillée d'un mode de réalisation

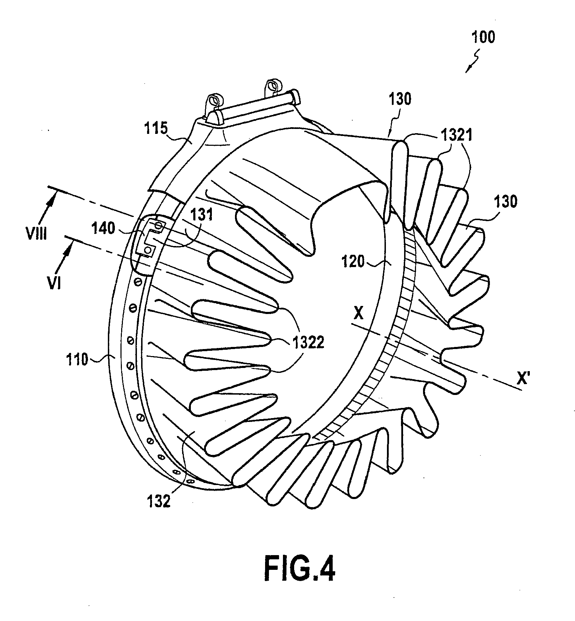

La figure 4 illustre un mélangeur 100 pour tuyère à flux séparés de turboréacteur conformément à un mode de réalisation de l'invention. Le mélangeur, qui s'étend suivant un axe longitudinal X-X', comprend, une virole interne 120 en matériau métallique (ex. Inconel ® 625) délimitant un canal d'écoulement pour le flux interne chaud, une virole externe 110 en matériau métallique (ex. Inconel ® 625) destinée à raccorder le mélangeur au carter d'échappement d'une tuyère de turboréacteur (non représenté), et une structure à lobes 130 à l'extrémité aval de laquelle se fait le mélange entre le flux interne chaud issu de la chambre de combustion du turboréacteur (appelé aussi flux primaire) circulant à l'intérieur du mélangeur et le flux externe froid provenant par exemple de la soufflante en amont (appelé aussi flux secondaire) circulant à l'extérieur du mélangeur.

La structure à lobes 130 présente une partie amont 131 destinée à être attachée à la virole externe 110 du mélangeur. Afin d'améliorer les performances du turboréacteur, la structure 130 comprend en aval une partie 132 qui s'étend longitudinalement à partir des bords de fuite des viroles 110, 120 et qui présente une série d'ondulations formant une pluralité de lobes externes 1321 et internes 1322 répartis de façon circonférentielle autour de l'axe longitudinal X-X' du mélangeur. De façon bien connue, l'utilisation d'une telle structure à lobes dans une tuyère à mélangeur flux interne/flux externe permet de contrôler le mélange entre les deux flux de manière à améliorer les performances du turboréacteur et réduire le bruit émis par ce dernier. Le mélangeur 100 comprend en outre un élément 115 qui permet de lisser la veine secondaire dans la zone de liaison avec le mât avion (non représenté). L'élément 115 est aligné avec un lobe aplati de la structure à lobes 130 au-dessus duquel sera disposée la prolonge de mât avion, le flux externe froid circulant le long de la prolonge de mât. L'élément 115 comporte des oreilles permettant la fixation de la tuyère secondaire (non représentée).

Conformément la présente invention, la structure à lobes 130 est réalisée en matériau composite à matrice céramique (CMC), c'est-à-dire un matériau formé d'un renfort en fibres réfractaires (carbone ou céramique) densifié par une matrice au moins partiellement céramique. Les matériaux composites à matrice céramique sont connus pour leurs bonnes propriétés mécaniques et leur capacité à conserver ces propriétés à température élevée. Par conséquent, la structure à lobes selon l'invention est constituée d'un matériau particulièrement bien adapté pour supporter les températures des flux générés en amont dans la turbomachine et en particulier celles des gaz chauds issus de la chambre de combustion (flux interne).

Pour fabriquer la structure à lobes de la présente invention, on réalise une préforme fibreuse en fibres réfractaires (carbone ou céramique) ayant sensiblement la forme de la structure à lobes à réaliser. Cette préforme est ensuite densifiée, de façon bien connue, par voie liquide et/ou gazeuse.

La densification par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La transformation du précurseur en céramique est réalisée par traitement thermique, après élimination du solvant éventuel et réticulation du polymère. Plusieurs cycles d'imprégnation successifs peuvent être réalisés pour parvenir au degré de densification souhaité. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS).

Le procédé par voie gazeuse consiste dans l'infiltration chimique en phase vapeur. La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants. A titre d'exemple, des précurseurs gazeux du carbone peuvent être des hydrocarbures tels que méthane et/ou propane donnant le carbone par craquage, et un précurseur gazeux de céramique, notamment de SiC, peut être du méthyltrichlorosilane (MTS) donnant du SiC par décomposition du MTS.

Il existe également des procédés mixtes comprenant à la fois des voies liquides et des voies gazeuses.

La structure à lobes de selon l'invention peut être réalisée en un des matériaux composites à matrice céramique (CMC) suivants : composite C/SiC (renfort en fibres de carbone et matrice en carbure de silicium), composite C/C-SiC (renfort en fibres de carbone et matrice comprenant une phase carbone, généralement au plus près des fibres, et une phase carbure de silicium), composite SiC/SiC (fibres de renfort et matrice en carbure de silicium).

Toutefois, la structure à lobes est de préférence réalisée en matériau composite SiC/SiC qui présente un module d'Young trois fois supérieur à un matériau composite C/SiC, ce qui permet de conférer à la structure à lobes un rigidité suffisante pour éviter l'utilisation d'un anneau raidisseur comme décrit dans le document WO 2006/035186.

Dans le cas d'une structure à lobes en matériau composite C/SiC ou C/C-SiC, l'utilisation d'un anneau raidisseur comme décrit dans le document WO 2006/035186 est souhaitable.

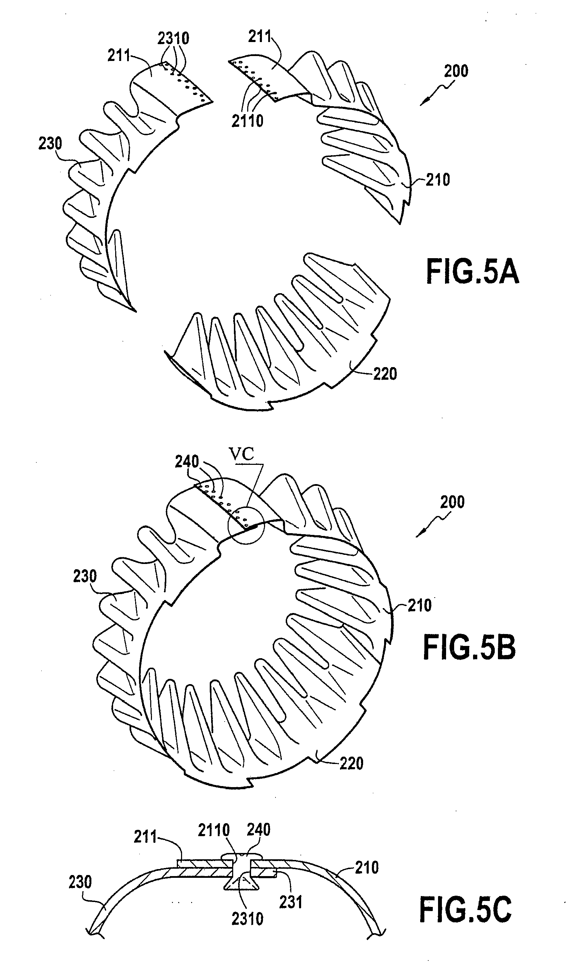

La structure à lobes selon l'invention peut être formée directement d'une seule pièce. Toutefois, la structure à lobes peut être aussi formée à partir d'une pluralité de secteurs assemblés entre eux, ce qui peut être avantageux dans certains cas notamment en raison de la forme complexe de la structure à réaliser. Un mode de réalisation de la structure à lobes sectorisée est illustré sur les figures 5A à 5C. Comme illustré sur la figure 5A, la structure à lobes 200 est réalisée par assemblage de trois secteurs 210, 220, 230 fabriqués en matériau composite à matrice céramique suivant un des procédés de fabrication décrit ci-dessus. Une fois réalisés, les secteurs sont reliés par leurs extrémités de manière à former une structure à lobes unitaire 200 telle qu'illustrée sur la figure 5B. Selon un mode de réalisation, les secteurs peuvent être assemblés les uns avec les autres au moyen de liaisons rivetées. Comme illustré sur la figure 5C, on superpose les extrémités 211 et 231 respectivement de deux secteurs adjacents 210 et 230, chaque extrémité 211, respectivement 231, comportant une pluralité d'orifices 2110, respectivement 2310, qui coopèrent entre eux une fois les deux extrémités superposées. On pose ensuite dans chaque passage formé par deux orifices 2110 et 2310 en coopération un rivet 240 qui assure le maintien entre les secteurs. D'autres moyens de fixation (ex. liaisons boulonnées, brasage,...) peuvent bien évidemment être utilisés pour assembler les secteurs entre eux.

Pour la fabrication d'une structure de mélangeur à lobes en matériau CMC, on pourra aussi se référer au document FR 07 53201.

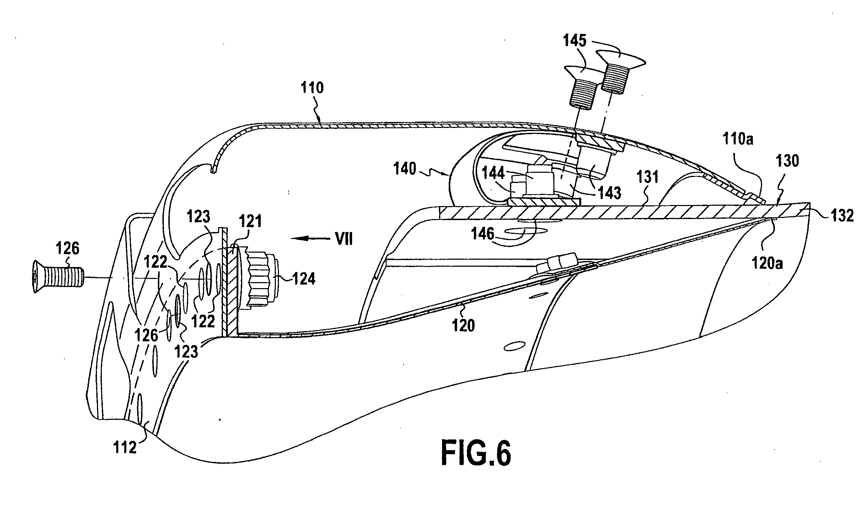

Conformément à l'invention et tel qu'illustré sur la figure 6, la structure à lobes 130 est attachée par sa partie amont 131 à la virole externe 110 au moyen de pattes de fixation souples 140 réparties angulairement, et de préférence uniformément, entre la structure à lobes et la virole externe. Le reste de la structure à lobes 130, à savoir la partie 132 comprenant les lobes, s'étend longitudinalement à partir des bords de fuites 110a et 120a respectivement de la virole externe 110 et de la virole interne 120. Les pattes de fixation souples 140 permettent de compenser les écarts de dilatation entre la structure à lobes 130 et la virole externe 110 et de limiter le chargement mécanique induit sur la structure à lobes. Elles permettent également de reprendre les tolérances au niveau de la fabrication et du montage. Les pattes 140 sont réalisées en matériau métallique, de préférence identique à celui de la virole externe 110. Le nombre de pattes de fixation souples 140 dépend du diamètre du mélangeur. A titre d'exemple, pour un mélangeur d'un diamètre de 800 mm, un nombre de 19 pattes de fixation souples est suffisant pour assurer un bon support de la structure à lobes et une bonne reprise des dilatations différentielles entre la structure à lobes et la virole externe.

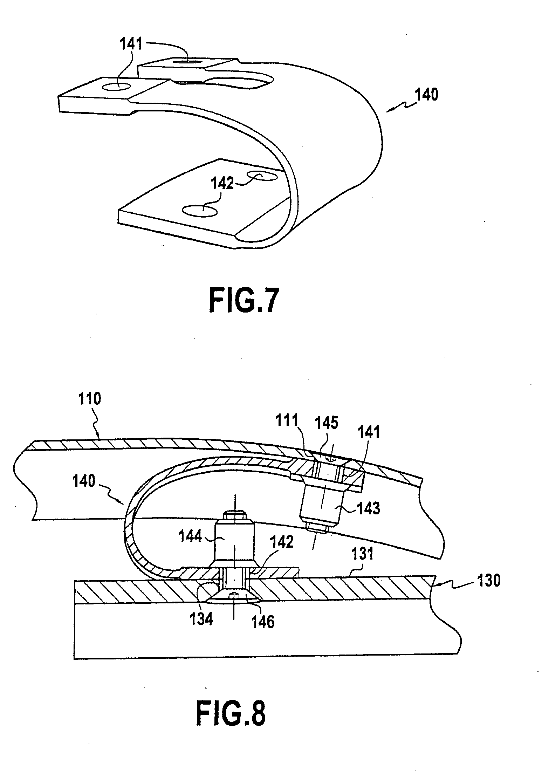

Comme illustré sur les figures 7 et 8, la partie supérieure des pattes 140 comporte des orifices 141 qui coopèrent avec des orifices 111 de la virole externe 110 pour le passage de vis de fixation 145 dans des écrous 143 sertis sur la face interne des pattes 140 autour des orifices 141. La partie inférieure des pattes 140 comporte des orifices 142 qui coopèrent avec des orifices 134 de la structure à lobes 130 pour le passage de vis de fixation 146 dans des écrous 144 sertis sur la face interne des pattes 140 autour des orifices 142.

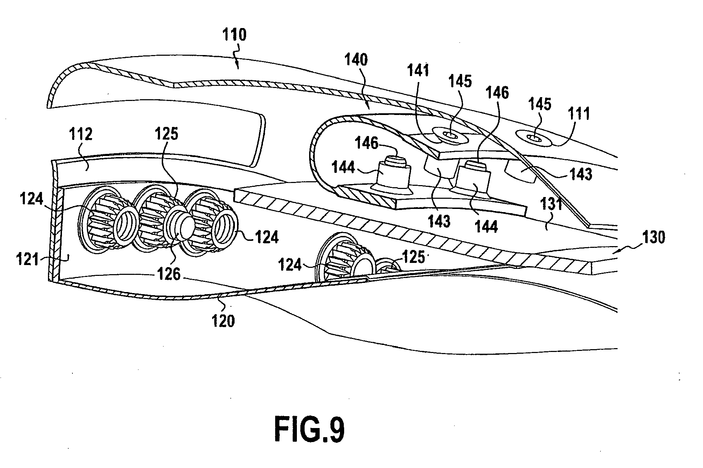

L'extrémité amont de la virole externe 110 comporte une bride 112 (figure 6). De même, la virole interne 120 comporte une bride 121 au niveau de son extrémité amont. La virole interne 120 est fixée à la virole externe 110 par assemblage des brides 112 et 121 l'une contre l'autre. Les brides 112 et 121 comportent des orifices 123 répartis sur la surface de ces dernières et qui coopèrent entre eux pour permettre le passage de vis 126 qui sont serrées dans des écrous 125 sertis sur la face de la bride 121 opposée à sa face d'assemblage avec la bride 112 (figure 9).

Par ailleurs, pour permettre l'accrochage du mélangeur au carter d'échappement du turboréacteur, les brides 112 et 121 comportent en outre des orifices 122 répartis sur la surface de ces dernières (figure 6) et qui coopèrent entre eux pour permettre le passage de vis (non représentées) qui sont serrées dans des écrous 124 sertis sur la face de la bride 121 opposée à sa face d'assemblage avec la bride 112 (figure 9).

Dans le mélangeur 100, la structure à lobes 130 est attachée à la virole externe 110 qui constitue un capotage externe structural du mélangeur. La virole externe 110 recevant principalement le flux externe froid se dilate moins que la virole interne 120 qui est destinée à prolonger la veine interne du moteur pour canaliser le flux interne chaud issu de la chambre de combustion. Par conséquent, en attachant la structure à lobes à la virole externe, on diminue les sollicitations mécaniques sur la structure à lobes en CMC ainsi qu'au niveau des pattes de fixation souples utilisées pour attacher la structure à lobes. Le nombre et les dimensions de ces pattes de fixation peuvent, en conséquence, être réduits, ce qui permet d'alléger l'ensemble de la structure du mélangeur.

En outre comme représenté sur la figure 9, les pattes 140 sont relativement compactes tandis que la virole interne 120 et la virole externe 110 sont directement fixées l'une à l'autre par leurs brides respectives 121 et 112, ce qui permet de conférer au mélangeur 100 une structure très compacte qui peut être intégrée dans des cavités de faible hauteur.

L'utilisation de matériau composite à matrice céramique pour la structure à lobes du mélangeur conformément à l'invention permet de diminuer la masse d'une tuyère de façon significative en comparaison avec une tuyère conventionnelle équipée d'un mélangeur entièrement métallique. En effet, l'utilisation d'une structure à lobes en matériau composite à matrice céramique plutôt qu'en métal permet de diminuer la masse de la tuyère de 40% environ. En outre, même dans le cas d'un mélangeur ayant une structure à lobes en matériau composite à matrice céramique, la conception particulière du mélangeur selon la présente invention permet de réduire encore la masse du mélangeur. En effet, à dimensions équivalentes, le mélangeur de la présente invention pèse 2 Kg de moins que celui réalisé suivant l'enseignement du document WO 2006/035186.

Ainsi, grâce à la conception du mélangeur selon l'invention, il est possible de réduire la masse en porte-à-faux, ce qui limite potentiellement le chargement mécanique sur la bride du carter d'échappement de la tuyère en cas de charges importantes engendrées par exemple par la perte d'une aube ou par un balourd. De par sa masse allégée, le mélangeur de l'invention permet également de réduire les efforts aux interfaces moteur/mât avion.

## Revendications

1. Mélangeur (100) pour tuyère à flux séparés de turboréacteur destiné à mélanger un flux interne chaud issu de la chambre de combustion du turboréacteur avec un flux externe froid issu de la soufflante du turboréacteur, ledit mélangeur comprenant une virole interne (120) délimitant un canal d'écoulement pour ledit flux interne chaud, une virole externe (110) disposée autour de la virole interne (120) et délimitant avec cette dernière un canal d'écoulement pour ledit flux externe froid, et une structure à lobes (130) dont les lobes (1321, 1322) s'étendent longitudinalement à partir des bords de fuite (110a, 120a) desdites viroles, ladite structure à lobes étant réalisée en matériau composite à matrice céramique,
**caractérisé en ce que** la structure à lobes (130) est attachée à la virole externe (110) par des moyens de liaison souples.

2. Mélangeur selon la revendication 1, **caractérisé en ce que** la structure à lobes (130) est attachée à ladite virole externe (110) via des pattes de fixation souples (140) en matériau métallique.

3. Mélangeur selon la revendication 1 ou 2, **caractérisé en ce que** la virole interne (120) est fixée sur la virole externe (110) par des moyens de liaison rigide.

4. Mélangeur selon la revendication 3, **caractérisé en ce que** la virole interne (120) comprend une première bride (121) et la virole externe (110) comprend une deuxième bride (112), lesdites première et deuxième brides (121, 112) étant fixées l'une contre l'autre, la deuxième bride (112) de la virole externe (110) formant une bride de fixation pour le carter d'échappement de la tuyère.

5. Mélangeur selon la revendication 4, **caractérisé en ce que** les première et seconde brides (121, 112) comportent chacune une pluralité d'orifices (122, 123) coopérant entre eux, un écrou (124; 125) étant serti en face de chaque orifice sur la première bride (121) de la virole interne (120).

6. Mélangeur selon l'une quelconque des revendications 1 à 5, **caractérisé en ce que** la structure à lobes (130) est formée en matériau composite à matrice céramique SiC/SiC.

7. Mélangeur selon l'une quelconque des revendications 1 à 6, **caractérisé en ce que** la structure à lobes (130) est formée d'une pluralité de secteurs (210, 220, 230) assemblés entre eux.

8. Mélangeur selon l'une quelconque des revendications 1 à 6, **caractérisé en ce que** la structure à lobes (130) est formée d'une seule pièce.

9. Turboréacteur comprenant une tuyère à flux séparés, **caractérisé en ce que** la tuyère est équipée d'un mélangeur selon l'une quelconque des revendications 1 à 8.

## Patentansprüche

1. Mischer (100) für eine Düse mit getrennten Strömen eines Turbostrahltriebwerks, welcher dazu bestimmt ist, einen aus der Brennkammer des Turbostrahltriebwerks stammenden heißen inneren Strom mit einem aus dem Gebläse des Turbostrahltriebwerks stammenden kalten äußeren Strom zu mischen, wobei der Mischer einen Innenring (120), welcher einen Strömungskanal für den heißen inneren Strom begrenzt, einen Außenring (110), welcher um den Innenring (120) herum angeordnet ist und mit letzterem einen Strömungskanal für den kalten äußeren Strom begrenzt, sowie eine Lappenstruktur (130) umfasst, deren Lappen (1321, 1322) sich ausgehend von den Hinterkanten (110a, 120a) der Ringe in Längsrichtung erstrecken, wobei die Lappenstruktur aus Keramikmatrix-Verbundwerkstoff gefertigt ist,
**dadurch gekennzeichnet, dass** die Lappenstruktur (130) durch flexible Verbindungsmittel an dem Außenring (110) befestigt ist.

2. Mischer nach Anspruch 1, **dadurch gekennzeichnet, dass** die Lappenstruktur (130) über flexible Befestigungslaschen (140) aus metallischem Material an dem Außenring (110) befestigt ist.

3. Mischer nach Anspruch 1 oder 2, **dadurch gekennzeichnet, dass** der Innenring (120) durch Mittel zum starren Verbinden an dem Außenring (110) befestigt ist.

4. Mischer nach Anspruch 3, **dadurch gekennzeichnet, dass** der Innenring (120) einen ersten Flansch (121) umfasst und der Außenring (110) einen zweiten Flansch (112) umfasst, wobei der erste und der zweite Flansch (121, 112) aneinander befestigt sind, wobei der zweite Flansch (112) des Außenrings (110) einen Befestigungsflansch für das Austrittsgehäuse der Düse bildet.

5. Mischer nach Anspruch 4, **dadurch gekennzeichnet, dass** der erste und der zweite Flansch (121, 112) jeweils eine Vielzahl von untereinander zusammenwirkenden Öffnungen (122, 123) umfassen, wobei eine Mutter (124; 125) gegenüber einer jeden Öffnung an den ersten Flansch (121) des Innenrings (120) angepresst ist.

6. Mischer nach einem der Ansprüche 1 bis 5, **dadurch gekennzeichnet, dass** die Lappenstruktur (130) aus SiC/SiC-Keramikmatrix-Verbundwerkstoff gebildet ist.

7. Mischer nach einem der Ansprüche 1 bis 6, **dadurch gekennzeichnet, dass** die Lappenstruktur (130) von einer Vielzahl von untereinander verbundenen Sektoren (210, 220, 230) gebildet ist.

8. Mischer nach einem der Ansprüche 1 bis 6, **dadurch gekennzeichnet, dass** die Lappenstruktur (130) aus einem einzigen Teil gebildet ist.

9. Turbostrahltriebwerk, umfassend eine Düse mit getrennten Strömen, **dadurch gekennzeichnet, dass** die Düse mit einem Mischer nach einem der Ansprüche 1 bis 8 ausgestattet ist.

## Claims

1. A mixer (100) for a separate-stream nozzle of a turbojet, the mixer being designed to mix the hot inner stream from the combustion chamber of the turbojet with a cold outer stream from the fan of the turbojet, said mixer comprising an inner shroud (120) defining a flow channel for said hot inner stream, an outer shroud (110) disposed around the inner shroud (120) and co-operating therewith to define a flow channel for said cold outer stream, and a lobed structure (130) having lobes (1321, 1322) that extend longitudinally from the trailing edges (110a, 120a) of said shrouds, said lobed structure being made of a ceramic matrix composite material, the mixer being **characterized in that** the lobed structure (130) is attached to the outer shroud (110) by flexible connection means.

2. A mixer according to claim 1, **characterized in that** the lobed structure (130) is attached to said outer shroud (110) via flexible fastener tabs (140) made of metallic material.

3. A mixer according to claim 1 or claim 2, **characterized in that** the inner shroud (120) is fastened to the outer shroud (110) via rigid connection means.

4. A mixer according to claim 3, **characterized in that** the inner shroud (120) includes a first flange (121) and the outer shroud (110) includes a second flange (112), said first and second flanges (121, 112) being fastened against one another, the second flange (112) of the outer shroud (110) forming a fastener flange for the exhaust casing of the nozzle.

5. A mixer according to claim 4, **characterized in that** each of the first and second flanges (121, 112) includes a plurality of orifices (122, 123) co-operating with one another, a nut (124; 125) being crimped on the first flange (121) of the inner shroud (120) in register with each orifice therein.

6. A mixer according to any one of claims 1 to 5, **characterized in that** the lobed structure (130) is made of a SiC/SiC ceramic matrix composite material.

7. A mixer according to any one of claims 1 to 6, **characterized in that** the lobed structure (130) is made up of a plurality of assembled-together sectors (210, 220, 230).

8. A mixer according to any one of claims 1 to 6, **characterized in that** the lobed structure (130) is made as a single piece.

9. A turbojet including a separate-stream nozzle, **characterized in that** the nozzle is fitted with a mixer according to any one of claims 1 to 8.
